# EUROPÄISCHE PATENTSCHRIFT

(11) **EP 3 638 552 B1**
(45) Veröffentlichungstag und Bekanntmachung des Hinweises auf die Patenterteilung: **02.06.2021**
(21) Anmeldenummer: 18732036.1
(22) Anmeldetag: 14.06.2018
(51) Int. Cl.: B60S 3/04

(54) **FAHRZEUGBEHANDLUNGSANLAGE MIT AUSZUGSYSTEM**
VEHICLE TREATMENT FACILITY WITH PULL-OUT SYSTEM
INSTALLATION DE TRAITEMENT DE VÉHICULE COMPRENANT UN SYSTÈME D'EXTRACTION

(30) Priorität: 16.06.2017 DE 102017113262
(43) Veröffentlichungstag der Anmeldung: 22.04.2020
(73) Patentinhaber: WashTec Holding GmbH, 86153 Augsburg (DE)
(72) Erfinder: ANKNER, Jürgen, 86316 Friedberg (DE); FISCHER, Ronald, 86179 Augsburg (DE); BRAUNBARTH, Michael, 86343 Königsbrunn (DE); KÖLBL, Ulrich, 86316 Friedberg (DE)
(74) Vertreter: Winter, Brandl - Partnerschaft mbB
(86) Internationale Anmeldenummer: PCT/EP2018/065824
(87) Internationale Veröffentlichungsnummer: WO 2018/229199

(56) Entgegenhaltungen:
- JP-A- H02 162 144
- JP-A- H09 104 327
- JP-B2- 2 861 691
- US-A1- 2006 102 209

## Beschreibung

### Technisches Gebiet

Die vorliegende Erfindung betrifft eine Portalwaschanlage, mit zumindest einem, als vertikale Säule des Waschportals ausgebildeten, Außenkorpus, in welchem zumindest eine Betriebseinheit, insbesondere zumindest ein Bedienelement und/oder ein Medienbehälter und/oder eine elektronische, pneumatische oder hydraulische Komponente, aufgenommen oder aufnehmbar ist. Die JP 2861691 B2 offenbart eine solche Portalwaschanlage.

### Stand der Technik

Bei Fahrzeugbehandlungsanlagen, insbesondere bei Portalwaschanlagen, sind diverse für den Betrieb der Anlage notwendigen Einheiten (Betriebseinheiten), wie z.B. Bedienelemente, Medienbehälter, elektronische, pneumatische, hydraulische Komponenten und dergleichen, in Gehäusen bzw. Außenkorpussen aufbewahrt. So befinden sich bspw. bei einer Portalwaschanlage üblicherweise die Medienbehälter in der einen vertikalen Säule des Waschportals, während sich die Elektronik in der anderen vertikalen Säule des Waschportals befindet. Die oben beschriebenen Betriebseinheiten sind bei den im Stand der Technik bekannten Portalwaschanlagen jeweils über Schwenktüren an der Säulenfront zugänglich, nicht nur um die jeweiligen Teile erstmalig zu montieren, sondern auch, um sie im Betrieb warten zu können. Beispielsweise müssen die Kanister, welche die Waschchemie beinhalten, nachgefüllt oder defekte/veraltete elektronische Komponente ausgetauscht werden.

Üblicherweise werden die Betriebseinheiten alle in Breitenrichtung des Portals angeordnet und weisen zur Portalfront. Da die Breite der Hallen in der Regel vorgegeben ist (z. B. vier Meter) und moderne Fahrzeuge (z.B. SUVs) in ihrer Größe und auch in ihrer Breite zunehmen, ist die Säulenbreite und der für die oben genannten Elemente zur Verfügung stehende Platz begrenzt. Ferner wäre es wünschenswert, wenn die lichte Breite zwischen den Säulen bei gleichem Außenmaß vergrößert werden könnte. Jedoch liegt eine weitere Beschränkung darin, dass an den jeweiligen Innenseiten der Portalsäulen ein Trocknungsgebläse vorgesehen ist, was den zur Verfügung stehenden Platz innerhalb der Säulen verringert.

Die oben beschriebene bisher übliche Konfiguration der Betriebseinheiten in den Säulen eines Waschportals hat folglich den Nachteil, dass der in der Säule zur Verfügung stehende Bauraum nicht optimal genutzt werden kann, bzw. dass bei Ausnutzung des Bauraums die von der Schwenktüre aus gesehen hinten liegenden Betriebseinheiten schlecht zugänglich sind.

### Offenbarung der Erfindung

Aufgabe der vorliegenden Erfindung ist es deshalb, Mittel und Wege bereitzustellen, die Zugänglichkeit von Betriebseinheiten innerhalb von Außenkorpussen in Fahrzeugbehandlungsanlagen zu verbessern.

Diese Aufgabe wird hinsichtlich einer Fahrzeugbehandlungseinrichtung durch die Merkmale des Anspruchs 1 gelöst. Vorteilhafte Weiterbildungen sind Gegenstand der Unteransprüche.

Grundsätzlich weist eine erfindungsgemäße Fahrzeugbehandlungsanlage der Protalwaschanlagenbauweise zumindest ein Waschportal auf. Zumindest eine (vertikale) Säule des Waschportals weist einen Außenkorpus bzw. ein Gehäuse auf, in welchem zumindest eine Betriebseinheit, insbesondere ein Bedienelement und/oder ein Medienbehälter und/oder eine elektronische, pneumatische oder hydraulische Komponente, aufgenommen oder aufnehmbar ist. Gemäß der erfinderischen Lösung, weist dieser Außenkorpus zumindest ein Auszugmittel auf, durch das die zumindest eine Betriebseinheit zwischen einer Schließposition, in welcher die Betriebseinheit im Außenkorpus/Gehäuse aufgenommen ist, und einer Öffnungsposition, in welcher die Betriebseinheit zumindest teilweise von außen zugänglich ist, translatorisch, bewegbar ist, d.h. die zumindest eine Betriebseinheit ist in der Schließposition in einer Säule des Waschportals angeordnet und kann mittels des Auszugmittels aus dieser herausgezogen werden, um von außen erreichbar zu sein.

. In anderen Worten ist eine Betriebseinheit, also eine für den Betrieb der Anlage verwendete Einheit, wie bspw. ein Bedienelement und/oder ein Medienbehälter und/oder eine elektronische, pneumatische oder hydraulische Komponente, in einem Normalzustand (der Schließposition) innerhalb eines Außenkorpus bzw. Gehäuses angeordnet und somit von äußeren Einflüssen abgeschirmt. Zur Erstmontage, Wartung, Austausch, Nachfüllen oder einer ähnlichen Operation, kann besagte Betriebseinheit über ein Auszugmittel aus dem Außenkorpus/Gehäuse herausgezogen werden. Hierzu ist die zumindest eine Betriebseinheit entweder mittelbar oder unmittelbar über das Auszugsmittel an dem Außenkorpus/Gehäuse relativverschiebbar gelagert. Notwendigerweise wird der Außenkorpus/das Gehäuse eine, insbesondere verschließbare, Zugangstür-/öffnung aufweisen, durch welche die zumindest eine Betriebseinheit mittels des Auszugmittels aus dem Außenkorpus/Gehäuse herausgezogen werden kann. Im Vergleich zu den im Stand der Technik bekannten Lösungen lassen sich Betriebseinheiten durch ein solches Auszugsystem aus dem Außenkorpus/Gehäuse herausziehen, womit auch von einer Zugangstür/-öffnung aus gesehen hinten liegende Betriebseinheiten gut erreichbar sind.

Gemäß einem bevorzugten Aspekt kann der Außenkorpus zumindest einen innerhalb des Außenkorpus aufnehmbaren Innenkorpus aufweisen, in oder an welchem die zumindest eine Betriebseinheit angeordnet oder anordenbar ist. Bei einer solchen Ausführungsform ist der Innenkorpus bevorzugt über das Auszugmittel derart im Außenkorpus gelagert, dass der Innenkorpus relativ zu dem Außenkorpus zwischen der Schließposition, in welcher der Innenkorpus im Außenkorpus aufgenommen ist, und der Öffnungsposition, in welcher die im Innenkorpus angeordnete Betriebseinheit zumindest teilweise von außen zugänglich ist, translatorisch, bewegbar ist. Das heißt, der Außenkorpus bzw. die Portalsäule kann einen oder mehrere Innenkorpusse aufweisen, welche zwischen der Öffnungsposition und der Schließposition verfahrbar sind. An jedem Innenkorpus kann/können wiederum jeweils eine oder mehrere Betriebseinheiten wie Medienbehälter, Elektronikkomponenten etc. angeordnet sein, welche dann in der Öffnungsposition des jeweiligen Innenkorpus von außen erreichbar/zugänglich sind. Vorteilhafterweise kann der zumindest eine Innenkorpus mit vorgefertigten Befestigungseinrichtungen, wie zum Beispiel Steckverbindungen oder Bohrlöchern, ausgebildet sein, die eine einfache Montage und/oder Demontage der Betriebseinheiten am Innenkorpus ermöglichen. Gemäß einer besonders bevorzugten Ausführungsform können am Innenkorpus Steck- bzw. Rastverbindungen vorgesehen sein, die ein werkzeugloses Verrasten entsprechend komplementär ausgebildeter Betriebseinheiten ermöglichen.

Gemäß einem bevorzugten Aspekt kann der Innenkorpus, im Wesentlichen dieselbe Längendimension aufweisen, wie der Innenraum des Außenkorpus bzw. der Säule, um den gesamten zur Verfügung stehenden Raum ausnutzen zu können.

Gemäß einer bevorzugten Ausführungsform kann die Fahrzeugbehandlungsanlage eine Durchfahrtsrichtung aufweisen, in welcher sie von einem zu behandelnden Fahrzeug durchfahren wird, und der Außenkorpus bzw. die Säule kann im Wesentlichen quaderförmig ausgebildet sein und in Durchfahrtsrichtung eine größere Kantenlänge aufweist als quer dazu. Bei einer entsprechenden Ausführungsform kann also z.B. eine vertikale Säule eines erfindungsgemäßen Waschportals in Portallängsrichtung eine längere Seitenlänge aufweisen als in Portalquerrichtung (quer zur Durchfahrtsrichtung). Eine solche in Portalbreitenrichtung verschmälerte Konstruktion der Säulen hat den Vorteil, dass die lichte Breite der Fahrzeugbehandlungsanlage vergrößert werden kann, ohne dabei die Außenabmaße des Portals zu vergrößern. Aufgrund des erfindungsgemäßen Auszugsystems wird dennoch eine gute Erreichbarkeit der in den Säulen angeordneten zumindest einen Betriebseinheit bereitgestellt.

Gemäß einem weiteren bevorzugten Aspekt der Erfindung kann die Betriebseinheit und/oder der Innenkorpus mittels des Auszugmittels im Wesentlichen parallel zur Durchfahrtsrichtung, insbesondere entgegen der Durchfahrtsrichtung, translatorisch zwischen der Schließposition und der Öffnungsposition bewegbar sein. Bevorzugt kann mittels des Auszugmittels eine Linearbewegung ausgeführt werden. In anderen Worten können die Betriebseinheiten mittels des Auszugmittels (und ggf. mittelbar über den Innenkorpus) bevorzugt aus einer Frontseite der Säule(n) linear herausziehbar sein.

Gemäß einem weiteren bevorzugten Ausführungsbeispiel kann die Betriebseinheit in der Öffnungsposition des Innenkorpus in Richtung quer zur Durchfahrtsrichtung freigelegt und/oder zugänglich sein. Hierzu können alle Auszugmittel an derselben Innenfläche des Außenkorpus/der Säule angeordnet sein. Weiter bevorzugt kann der zumindest eine Innenkorpus mit seiner Rückseite an den derart angeordneten Auszugmitteln montiert sein und eine Art Rückwand bilden, sodass die zumindest eine Betriebseinheit von der der Rückwand des Innenkorpus (bzw. den Auszugmitteln) gegenüberliegenden Seite zugänglich/erreichbar ist. Besonders bevorzugt kann die zumindest eine Betriebseinheit in der Öffnungsposition von der Portalinnenseite her zugänglich sein. In anderen Worten kann bevorzugt ein Auszugsystem nach der Art eines Apothekerschranks vorgesehen sein, sodass die zumindest eine Betriebseinheit (ggf. mit dem Innenkorpus) mittels des Auszugmittels in Durchfahrtsrichtung des Portals ausziehbar und in der Öffnungsposition in Richtung quer zur Durchfahrtsrichtung zugänglich/erreichbar ist.

Gemäß einem weiteren bevorzugten Aspekt der Erfindung kann zumindest der Innenkorpus an einer kurzen Stirnseite eine Frontblende aufweisen, die in der Schließposition, insbesondere bündig, besonders bevorzugt mediendicht, mit dem Außenkorpus abschließt bzw. die Zugangsöffnung verschließt. Auf diese Weise kann eine Abschirmung der im Außenkorpus/der Säule angeordneten Betriebseinheiten gegenüber äußeren Einflüssen sichergestellt sein. Gemäß einer alternativen Ausführungsform kann die Zugangsöffnung auch mit einer Schwenk- oder Schiebetüre verschließbar sein.

Gemäß einer weiteren bevorzugten Ausführungsform kann der Außenkorpus eine Anzahl an Innenkorpussen aufweisen, die jeweils separat über ein eigenes Auszugmittel zwischen der Schließposition und der Öffnungsposition bewegbar sind, und in denen jeweils zumindest eine Betriebseinheit angeordnet oder anordenbar ist. Bevorzugt kann es sich dabei um mehrere vertikal übereinander angeordnete Innenkorpusse handeln, die jeweils separat über ein eigenes Auszugmittel linearbeweglich geführt sind und weiter bevorzugt in der Öffnungsposition alle von derselben Seite aus zugänglich/erreichbar sein können.

Gemäß einem weiteren bevorzugten Aspekt der Erfindung kann das Auszugmittel als Schiene ausgebildet sein, insbesondere als Teleskopschiene. Bevorzugt kann die Teleskopschiene über eine Kugelführung gelagert sein, um auch hohe Lasten tragen zu können.

Gemäß einer weiteren bevorzugten Ausführungsform kann die Fahrzeugbehandlungsanlage eine Verfahreinrichtung, insbesondere einen Stellmotor oder eine Pneumatik, zum kraftbetätigten Verfahren des Innenkorpus relativ zum Außenkorpus aufweisen.

Gemäß einem weiteren bevorzugten Aspekt der Erfindung kann die Fahrzeugbehandlungsanlage eine Verrastungseinrichtung zum lösbaren Verrasten des Innenkorpus und/oder des Auszugmittels (relativ zum Außenkorpus/zur Säule) in der Schließposition und/oder in der Öffnungsposition aufweisen. Eine solche Verrastungseinrichtung ist insbesondere dann von großer Wichtigkeit, wenn die Auszugrichtung parallel zur Durchfahrtsrichtung ist, um eine unbeabsichtigte Bewegung bzw. ein unbeabsichtigtes Öffnen der Auszugmittel/Innenkorpusse/Betriebseinheiten infolge einer Bewegung der Fahrzeugbehandlungseinrichtung (des Waschportals) zu verhindern.

Gemäß einer weiteren bevorzugten Ausführungsform kann die Fahrzeugbehandlungsanlage eine Sicherheitseinrichtung aufweisen. Die Sicherheitseinrichtung ist bei einer solchen Ausführungsform dazu ausgebildet, zu erkennen, wenn sich das zumindest eine Betriebsmittel bzw. der Innenkorpus nicht in der Schließposition befindet und einen Betrieb der Fahrzeugbehandlungsanlage verhindert, wenn sie erkennt, dass sich das Betriebsmittel bzw. der Innenkorpus nicht in der Schließposition befindet. Bevorzugt kann es sich bei der Sicherheitseinrichtung um einen Kontaktunterbrecher handeln, der bspw. an dem Innenkorpus oder dem Auszugmittel oder der Frontblende angeordnet sein kann.

Die Erfindung wird nachstehend anhand bevorzugter Ausführungsbeispiele unter Bezugnahme auf die begleitenden Figuren näher erläutert. Die Figuren sind lediglich schematischer Natur und dienen ausschließlich dem Verständnis der Erfindung. Die gleichen Elemente sind mit denselben Bezugszeichen versehen.

Es zeigen:
Fig. 1 eine perspektivische Ansicht einer Fahrzeugbehandlungsanlage gemäß einer bevorzugten Ausführungsform mit ausgezogenen Medienbehältern;
Fig.2 eine Detailansicht eines Auszugmittels für Medienbehälter gemäß der bevorzugten Ausführungsform;
Fig. 3 eine Detailansicht eines Auszugsystems für Medienbehälter gemäß der bevorzugten Ausführungsform;
Fig. 4 eine Rückansicht des Auszugsystems für Medienbehälter gemäß der bevorzugten Ausführungsform;
Fig. 5 eine perspektivische Ansicht der Fahrzeugbehandlungsanlage gemäß der bevorzugten Ausführungsform mit ausgezogenen Elektronikkomponenten;
Fig. 6 eine Detailansicht eines Auszugmittels für Elektronikkomponenten gemäß der bevorzugten Ausführungsform;
Fig. 7 eine Detailansicht eines Auszugsystems für Elektronikkomponenten gemäß der bevorzugten Ausführungsform; und
Fig. 8 eine Rückansicht des Auszugsystems für Elektronikkomponenten gemäß der bevorzugten Ausführungsform.

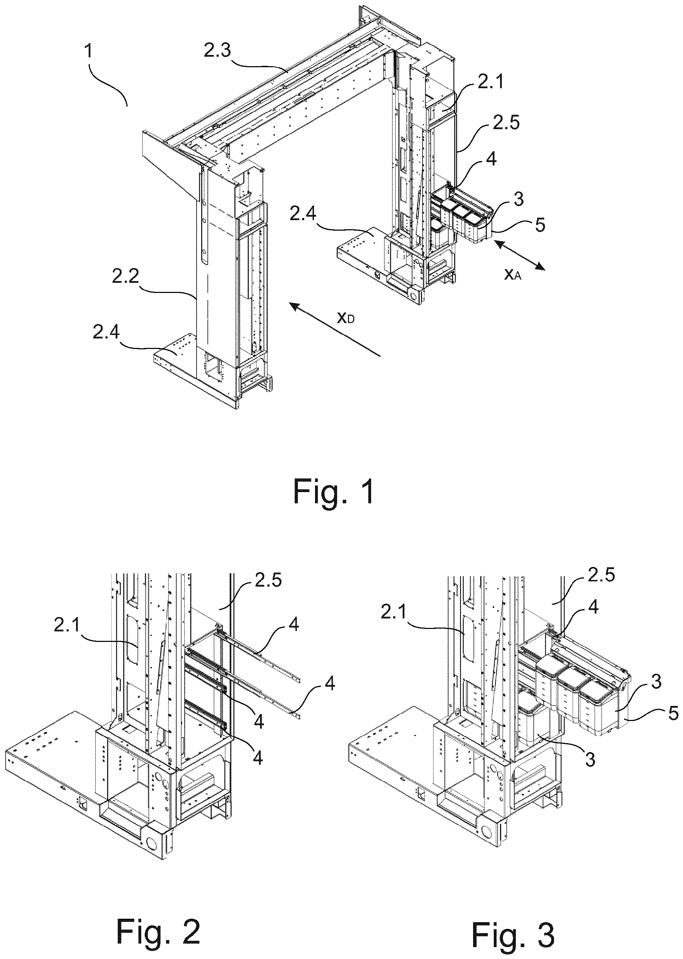

Fig. 1 zeigt eine perspektivische Ansicht des Innenlebens einer Fahrzeugbehandlungsanlage 1, genauer gesagt einer Portalwaschanlage, gemäß einer bevorzugten Ausführungsform der Erfindung. Die Fahrzeugbehandlungsanlage 1 weist in ihrem grundsätzlichen Aufbau zwei vertikale (Portal-)Säulen 2.1, 2.2 sowie eine die beiden Säulen verbindende Traverse 2.3 auf, an welchen in der Regel diverse Fahrzeugbehandlungseinrichtungen, wie bspw. rotierende Bürsten oder Düsen, angeordnet sind. Am unteren Ende der beiden Säulen 2.1, 2.2 findet sich jeweils ein Portalfuß 2.4 mittels welchem die Fahrzeugbehandlungsanlage, bspw. über ein Schienensystem, linear verfahrbar ist. Dargestellt ist der tragende (Metall-)Korpus des Portals, ohne Verkleidung und ohne die obengenannten Fahrzeugbehandlungseinrichtungen, innerhalb dessen diverse, für den Betrieb der Fahrzeugbehandlungsanlage 1 verwendete bzw. notwendige, Einbauten/Einheiten/Komponenten 3 (nachfolgend Betriebseinheiten 3 genannt) angeordnet bzw. anordenbar sind. Beispiele für die innerhalb des Korpus des Portals angeordnete bzw. anordenbare Betriebseinheiten 3 sind Bedienelemente, Medienbehälter, elektronische, pneumatische, hydraulische Komponenten und dergleichen. Die Anordnung der Betriebseinheiten 3 innerhalb des Portalkorpus bietet zum einen Schutz für die Betriebseinheiten 3 und sorgt zum anderen für kurze Wege zu den von den Betriebseinheiten versorgten/gesteuerten Einrichtungen, bspw. den am Portal 2.1, 2.2, 2.3 angeordneten (nicht dargestellten) Fahrzeugbehandlungseinrichtungen.

Die beiden vertikalen Säulen 2.1, 2.2 bilden eine lichte Breite, in welcher ein zu behandelndes Fahrzeug (nicht dargestellt) abgestellt werden kann, um von den an der Fahrzeugbehandlungsanlage 1 angeordneten Fahrzeugbehandlungseinrichtungen (nicht dargestellt) behandelt zu werden. Entsprechend weist die Fahrzeugbehandlungsanlage 1 eine Durchfahrtsrichtung x_{D} auf, in welcher die Fahrzeugbehandlungsanlage 1 von den zu behandelnden Fahrzeugen durchfahren wird. Nachfolgend soll die Durchfahrtsrichtung x_{D} als Längsrichtung der Fahrzeugbehandlungsanlage 1 und die Richtung quer dazu als Breitenrichtung der Fahrzeugbehandlungsanlage 1 definiert werden.

Es ist ein lange bestehendes Bedürfnis in den entsprechenden Fachkreisen, die lichte Breite zwischen den Säulen 2.1, 2.2 bei gleichbleibendem Außenmaß des Portals 2.1, 2.2, 2.3 zu vergrößern. Dies hat den Hintergrund, dass (moderne) Fahrzeuge eher breiter als schmäler werden, während die bereits errichteten Hallen für Fahrzeugbehandlungsanlagen in ihrer Breite (oft ca. 4 m) festgelegt sind. Gleichzeitig ist es schwierig, die Breite der vertikalen Säulen 2.1, 2.2 zu verringern, ohne dabei die Zugänglichkeit der darin angeordneten Betriebseinheiten 3 zu verschlechtern.

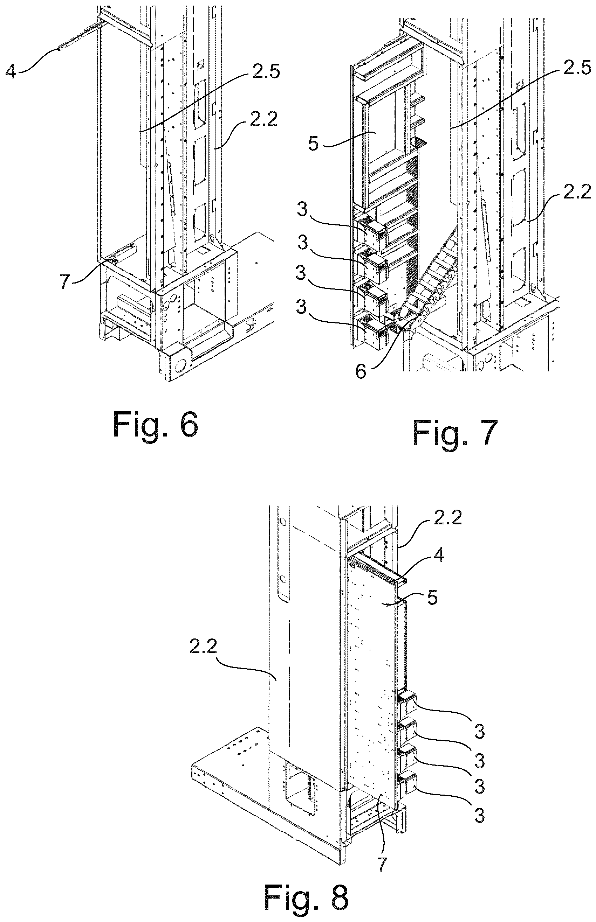

Zur Lösung dieses Problems, weist die dargestellte Portalwaschanlage 1 ein Auszugsystem mit mehreren (linearen) Auszugmitteln 4 auf (vgl. Fign. 2 und 6), an welchen eine Anzahl an Betriebseinheiten 3 (Medienbehälter) über einen Innenkorpus 5 in eine Auszugsrichtung x_{A} ausziehbar gelagert sind. Auf diese Weise lässt sich das Innenleben der Säulen 2.1, 2.2 von einer Schließposition, in welcher die Betriebseinheiten 3 in den Säulen 2.1, 2.2 aufgenommen sind, in eine Öffnungsposition herausziehen, in welcher selbst die hintersten Betriebseinheiten 3 gut zugänglich sind.

Die Auszugsrichtung x_{A} ist gemäß der dargestellten Ausführungsform parallel zur Durchfahrtsrichtung x_{D}. Das Auszugsystem ist derart angeordnet, dass das Ausziehen aus einer entsprechenden Zugangsöffnung 2.5 in der Front der vertikalen Säulen 2.1, 2.2 erfolgt. Das Anordnen der Zugangsöffnung 2.5 in der Front der Säulen 2.1, 2.2 und damit in den kurzen Seiten der Säulen 2.1, 2.2 ist zum einen vorteilhaft für die Statik der Fahrzeugbehandlungsanlage 1 bzw. des Portalkorpus und zum anderen ist die Zugangsöffnung 2.5 somit von den bei der Fahrzeugbehandlung versprühten Behandlungsmedien abgewandt. Zudem sind die rotierenden vertikalen Bürsten (nicht dargestellt) der Fahrzeugbehandlungsanlage 1 an den Rückseiten der vertikalen Säulen 2.1, 2.2 angeordnet, so dass eine Positionierung der Zugangsöffnung 2.5 bzw. des Auszugsystems 3, 4, 5 an dieser Seite nicht praktikabel wäre.

Die Auszugsmittel 4 sind im dargestellten Ausführungsbeispiel an den zur Außenseite der Fahrzeugbehandlungsanlage 1 hin gewandten Innenwänden der vertikalen Säulen 2.1, 2.2 angeordnet. Die Betriebseinheiten 3 sind jeweils mit ihrer Rückseite lösbar an Innenkorpussen 5 befestigt, welche wiederum mit ihrer Rückseite an den Auszugmitteln 4 angeordnet sind (vgl. Fign. 3 und 7). Das konstruktiv derart gestaltete Auszugsystem 3, 4, 5 ist parallel zur (bzw. entgegen der) Durchfahrtsrichtung x_{D} ausziehbar und im ausgezogenen Zustand (in der Öffnungsposition) in Richtung quer zur Durchfahrtsrichtung x_{D} zugänglich. Genauer gesagt sind die Betriebseinheiten 3 im Öffnungszustand von innen (also vom Durchfahrtsbereich) her zugänglich und können von dort aus bspw. befüllt oder ausgewechselt werden. Die oben beschriebene Anordnung ermöglicht es, auch bei vergleichsweise schmaler Konstruktion der Säulen 2.1, 2.2, den kompletten Innenraum der Säulen 2.1, 2.2 in Längsrichtung zu nutzen und die Betriebseinheiten 3 dennoch bequem erreichen zu können. Im Vergleich dazu ist in den im Stand der Technik bekannten Portalwaschanlagen parallel zur Zugangsöffnung 2.5 (bzw. quer zur Durchfahrtsrichtung) ein Trennblech vorgesehen, auf welchem alle Einbauten/Betriebseinheiten 3 montiert sind, weshalb die Tiefendimension (in Längsrichtung) der Säule nicht effizient genutzt wird und weshalb die Säulenbreite bei diesen bekannten Anlagen nicht weiter reduziert werden kann. Man könnte also sagen, dass im dargestellten erfindungsgemäßen Bauraumkonzept dieses Trennblech weggelassen, die Einbauten/Betriebseinheiten 3 um 90° gedreht und auf ein Auszugsystem montiert wurden.

Bei der dargestellten Fahrzeugbehandlungsanlage 1 sind in einer der vertikalen Säulen 2.1 diverse Medienbehälter 3 angeordnet, in welchen (chemische) Behandlungsmedien aufbewahrt sind, die bei der Fahrzeugbehandlung, entweder unverdünnt oder mit Wasser aus einer Wasserquelle vermischt, durch nicht dargestellte Fahrzeugbehandlungseinrichtungen (Düsen) auf ein Fahrzeug appliziert werden können. Die Medienbehälter 3 sind in mehreren vertikal übereinander angeordneten Innenkorpussen 5 angebracht, die jeweils über zwei Auszugmittel 4 aus der vertikalen Säule 2.1 herausgezogen werden können. Jeder Innenkorpus 5 nutzt im Wesentlichen die gesamte Längendimension des durch die Portalsäule 2.1, gebildeten Außenkorpus 2.1 und ermöglicht somit eine optimale Raumausnutzung. Das dargestellte mehrgliedrige System mit mehreren vertikal übereinander angeordneten und separat herausziehbaren Innenkorpussen 5, hat den Vorteil, dass die separat herausgezogenen Medienbehälter 3 immer von oben zugänglich und somit leicht befüllbar sind.

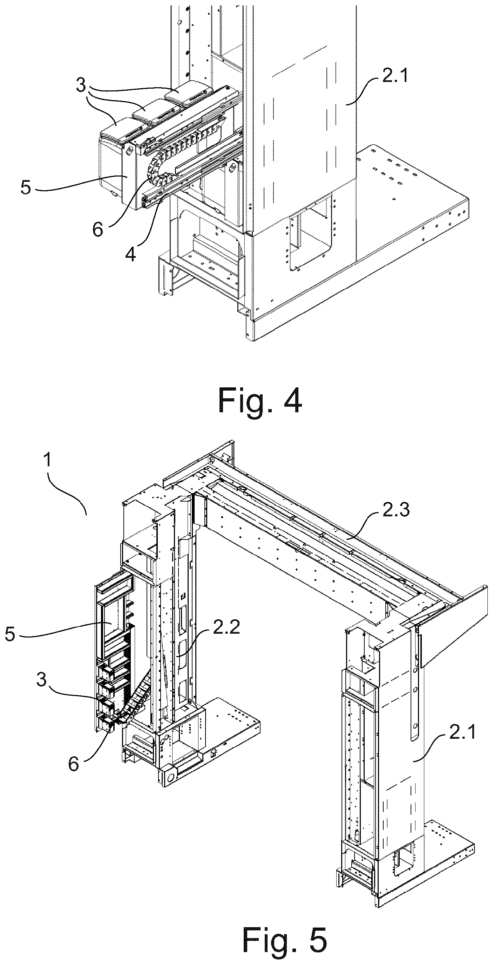

In der gegenüberliegenden (linken) vertikalen Säule 2.2 der dargestellten Fahrzeugbehandlungsanlage 1 sind diverse Elektronikkomponenten 3 an einem Innenkorpus 5 angeordnet (vgl. Fign. 5 bis 8). Im Gegensatz zu den separat ausziehbaren, vertikal übereinander angeordneten Innenkorpussen der Säule 2.1, sind bei der Säule 2.2 die Elektronikkomponenten 3 an einer gemeinsamen Montageplatte 5 montiert, die den Innenkorpus 5 bildet. Die Elektronikkomponenten 3 können folglich als eine Einheit aus dem Inneren des durch die vertikale Säule 2.2. gebildeten Außenkorpus herausgezogen werden, um für Wartungs- oder Austauscharbeiten zugänglich zu sein. Die Montageplatte 5 kann vorteilhafterweise Befestigungsstrukturen, Steckplätze und/oder Montagebohrungen aufweisen, die eine leichte Montage standardisierter Elektronikkomponenten 3 ermöglichen. Der Innenkorpus 5 bzw. die Montageplatte kann auch integrierte Elektronikstrukturen/Leiterstrukturen für die Energieversorgung oder für eine Kommunikation zwischen den Elektronikkomponenten 3 aufweisen.

Die Auszugmittel 4 oder der Innenkorpus 5 sind gemäß der bevorzugten Ausführungsform durch eine nicht dargestellte Verfahreinrichtung, bspw. durch einen Stellmotor oder eine Pneumatikeinheit, relativ zum Außenkorpus 2.1, 2.2 kraftbetätigt verfahrbar, sodass der Anwender beim Verfahren der oftmals schweren Betriebseinheiten 3 unterstützt wird. Wie am besten in den Fign. 4 und 7 zu erkennen ist, kann an dem Innenkorpus 5 vorteilhafter Weise eine Energieführungskette 6 vorgesehen sein, die die Einhaltung des kleinsten zulässigen Biegeradius von am Innenkorpus 5 mitgeführten Schläuchen und/oder Kabeln gewährleistet.

Die Auszugsmittel 4 sind in der dargestellten bevorzugten Ausführungsform als Teleskopschienen ausgebildet, die einen großen Ausfahrweg bei vergleichsweise hoher Stabilität bereitstellen. Im dargestellten Beispiel sind die relativ zueinander verfahrbaren Schienen der Teleskopschienen als Schwerlastauszug ausgeführt und über eine Kugelführung gelagert.

Es ist von Vorteil, wenn an den Frontseiten der Innenkorpusse 5 bzw. der Auszugmittel 4 Frontblenden (nicht dargestellt) angeordnet sind, welche die Zugangsöffnung 2.5 in der Schließposition der Auszugmittel 4, vorzugsweise mediendicht, verschließen. Alternativ ist es auch denkbar, dass die Zugangsöffnung durch eine Schwenktüre (nicht dargestellt) verschließbar ist, nach deren Öffnen die Innenkorpusse 5 mit den Betriebseinheiten 3 über die Auszugmittel herausziehbar sind.

Wie am besten in den Fign. 6 und 8 zu erkennen ist, weist die dargestellte Fahrzeugbehandlungseinrichtung 1 eine Verrastungseinrichtung 7 auf, hier beispielhaft durch einen federvorgespannten Bolzen 7 mit passenden Bohrungen 7 im Innenkorpus 5 realisiert, durch welche ein lösbares Verrasten des Innenkorpus 5 (oder alternativ des Auszugmittels 4) in der Schließposition und/oder in der Öffnungsposition möglich ist. Auf diese Weise kann ein ungewolltes Verfahren des Innenkorpus 5 infolge einer Bewegung der Fahrzeugbehandlungseinrichtung 1 im Betrieb unterbunden werden.

Ein weiteres vorteilhaftes Merkmal der dargestellten Fahrzeugbehandlungsanlage 1 ist eine Sicherheitseinrichtung, die dazu ausgebildet ist, zu erkennen, wenn sich ein Innenkorpus 5 bzw. ein Auszugmittel 4 nicht in der Schließposition befindet und in einem solchen Fall einen Betrieb der Fahrzeugbehandlungsanlage aus Sicherheitsgründen verhindert. Im dargestellten Beispiel ist dies durch Kontaktunterbrecher (nicht dargestellt) an den Frontblenden der Innenkorpusse 5 umgesetzt, die erkennen, wenn die Frontblende bzgl. des durch die vertikale Säule 2.1, 2.2 gebildeten Außenkorpusses nicht geschlossen/bündig sind.

### Bezugszeichen

- 1: Fahrzeugbehandlungsanlage;
- 2.1: rechte (Portal-)Säule (Außenkorpus);
- 2.2: linke (Portal-)Säule (Außenkorpus);
- 2.3: Traverse;
- 2.4: Portalfuß;
- 2.5: Zugangsöffnung;
- 3: Betriebseinheit;
- 4: Auszugmittel (Teleskopschiene);
- 5: Innenkorpus;
- 6: Energieführungskette; und
- 7: Verrastungseinrichtung

## Patentansprüche

1. Portalwaschanlage (1), mit
zumindest einem, als vertikale Säule des Waschportals ausgebildeten, Außenkorpus (2.1, 2.2), in welchem zumindest eine Betriebseinheit (3), insbesondere zumindest ein Bedienelement und/oder ein Medienbehälter und/oder eine elektronische, pneumatische oder hydraulische Komponente, aufgenommen oder aufnehmbar ist,
**dadurch gekennzeichnet, dass**
der Außenkorpus (2.1, 2.2) zumindest ein Auszugmittel (4) aufweist, durch das die zumindest eine Betriebseinheit (3) zwischen
einer Schließposition, in welcher die Betriebseinheit (3) im Außenkorpus (2.1, 2.2) aufgenommen ist, und
einer Öffnungsposition, in welcher die Betriebseinheit (3) zumindest teilweise von außen zugänglich ist, translatorisch bewegbar ist.

2. Portalwaschanlage (1) gemäß Anspruch 1, **dadurch gekennzeichnet, dass** der Außenkorpus (2.1, 2.2) zumindest einen innerhalb des Außenkorpus (2.1, 2.2) aufnehmbaren Innenkorpus (5) aufweist, in oder an welchem die zumindest eine Betriebseinheit (3) angeordnet oder anordenbar ist; und
dass der Innenkorpus (5) über das Auszugmittel (4) derart im Außenkorpus (2.1, 2.2) gelagert ist, dass der Innenkorpus (5) relativ zu dem Außenkorpus (2.1, 2.2) zwischen
der Schließposition, in welcher der Innenkorpus (5) im Außenkorpus (2.1, 2.2) aufgenommen ist, und
der Öffnungsposition, in welcher die zumindest eine im oder am Innenkorpus (5) angeordnete Betriebseinheit (3) zumindest teilweise von außen zugänglich ist, translatorisch bewegbar ist.

3. Portalwaschanlage (1) gemäß Anspruch 1 oder 2, **dadurch gekennzeichnet, dass** die Portalwaschanlage (1) eine Durchfahrtsrichtung (x_{D}) aufweist, in welcher sie von einem zu behandelnden Fahrzeug durchfahren wird, und
der Außenkorpus (2.1, 2.2) im Wesentlichen quaderförmig ausgebildet ist und in Durchfahrtsrichtung (x_{D}) eine größere Kantenlänge aufweist als in Querrichtung dazu.

4. Portalwaschanlage (1) gemäß Anspruch 3, **dadurch gekennzeichnet, dass** die Betriebseinheit (3) und/oder der Innenkorpus (5) mittels des Auszugmittels (4) im Wesentlichen parallel zur Durchfahrtsrichtung translatorisch, insbesondere linear, zwischen der Schließposition und der Öffnungsposition bewegbar ist.

5. Portalwaschanlage (1) gemäß einem der Ansprüche 3 oder 4, **dadurch gekennzeichnet, dass** die Betriebseinheit (3) in der Öffnungsposition des Innenkorpus (5) in Richtung quer zur Durchfahrtsrichtung (x_{D}) freigelegt und/oder zugänglich ist.

6. Portalwaschanlage (1) gemäß einem der Ansprüche 2 bis 5, **dadurch gekennzeichnet, dass** der Außenkorpus (2.1, 2.2) eine Anzahl an Innenkorpussen (5) aufweist, die jeweils separat über ein eigenes Auszugmittel (4) zwischen der Schließposition und der Öffnungsposition bewegbar sind, und
in denen jeweils zumindest eine Betriebseinheit (3) angeordnet oder anordenbar ist.

7. Portalwaschanlage (1) gemäß einem der Ansprüche 1 bis 6, **dadurch gekennzeichnet, dass** das Auszugmittel (4) als Schiene ausgebildet ist, welche insbesondere über eine Kugelführung gelagert ist.

8. Portalwaschanlage (1) gemäß einem der Ansprüche 1 bis 7, **gekennzeichnet durch**
eine Verfahreinrichtung, insbesondere einen Stellmotor oder eine Pneumatik, zum kraftbetätigten Verfahren des Auszugmittels (4) und/oder des Innenkorpus (5) relativ zum Außenkorpus (2.1, 2.2).

9. Portalwaschanlage (1) gemäß einem der Ansprüche 1 bis 8, **gekennzeichnet durch** eine Verrastungseinrichtung (7) zum lösbaren Verrasten des Innenkorpus (5) und/oder des Auszugmittels (4) in der Schließposition und/oder in der Öffnungsposition.

10. Portalwaschanlage (1) gemäß einem der Ansprüche 1 bis 9, **gekennzeichnet durch** eine Sicherheitseinrichtung, insbesondere einen Kontaktunterbrecher an dem Innenkorpus (5) oder dem Auszugmittel (4) oder einer Tür oder Frontblende, welche dazu ausgebildet ist,
zu erkennen, wenn sich der Innenkorpus (5) nicht in der Schließposition befindet und
welche einen Betrieb der Portalwaschanlage (1) verhindert, wenn sie erkennt, dass sich der Innenkorpus (5) nicht in der Schließposition befindet.

## Claims

1. Gantry washing facility (1), with
at least one outer body (2.1, 2.2) designed as a vertical pillar of a washing gantry, in which at least one operating unit (3), in particular at least one operating element and/or a media container and/or an electronic, pneumatic or hydraulic component, is housed or can be housed,
**characterized in that**
the outer body (2.1, 2.2) comprises at least one pull-out means (4) by which the at least one operating unit (3) is translatorically movable between
a closed position in which the operating unit (3) is housed in the outer body (2.1, 2.2) and
an opened position in which the operating unit (3) is at least partially accessible from the outside.

2. Gantry washing facility (1) according to claim 1, **characterized in that** the outer body (2.1, 2.2) has at least one inner body (5) which can be housed inside the outer body (2.1, 2.2), in or at which the at least one operating unit (3) is arranged or can be arranged; and
**in that** the inner body (5) is supported in the outer body (2.1, 2.2) via the pull-out means (4) in such a way that the inner body (5) is translatorically movable relative to the outer body (2.1, 2.2) between
the closed position in which the inner body (5) is housed in the outer body (2.1, 2.2) and
the opened position in which the at least one operating unit (3) arranged in or at the inner body (5) is at least partially accessible from the outside.

3. Gantry washing facility (1) according to claim 1 or 2, **characterized in that** the gantry washing facility (1) has a direction of passage (x_{D}) in which a vehicle to be treated passes through it, and
the outer body (2.1, 2.2) is substantially cuboid in shape and has a greater edge length in the direction of passage (x_{D}) than in the transverse direction thereto.

4. Gantry washing facility (1) according to claim 3, **characterized in that** the operating unit (3) and/or the inner body (5) can be moved by means of the pull-out means (4) essentially parallel to the direction of passage in a translatory, in particular linear, manner between the closed position and the opened position.

5. Gantry washing facility (1) according to one of claims 3 to 4, **characterized in that** the operating unit (3) is exposed and/or accessible in the opened position of the inner body (5) in the direction transverse to the direction of passage (x_{D}).

6. Gantry washing facility (1) according to one of claims 2 to 5, **characterized in that** the outer body (2.1, 2.2) has a number of inner bodies (5) which are each separately movable via their own pull-out means (4) between the closed position and the opened position, and
in each of which at least one operating unit (3) is arranged or can be arranged.

7. Gantry washing facility (1) according to one of claims 1 to 6, **characterized in that** the pull-out means (4) is designed as a rail which is supported in particular via a ball guide.

8. Gantry washing facility (1) according to one of claims 1 to 7, **characterized by**
a moving unit, in particular a servomotor or a pneumatics, for power-operated movement of the pull-out means (4) and/or of the inner body (5) relative to the outer body (2.1, 2.2).

9. Gantry washing facility (1) according to one of claims 1 to 8, **characterized by** a latching device (7) for releasably latching the inner body (5) and/or the pull-out means (4) in the closed position and/or in the opened position.

10. Gantry washing facility (1) according to one of claims 1 to 9, **characterized by** a safety device, in particular a contact breaker at the inner body (5) or the pull-out means (4) or a door or front panel designed
to detect if the inner body (5) is not in the closed position, and
which prevents operation of the gantry washing facility (1) when it detects that the inner body (5) is not in the closed position.

## Revendications

1. Installation de lavage à portique (1) avec
au moins un corps extérieur (2.1, 2.2) réalisé comme colonne verticale du portique de lavage, dans lequel au moins une unité de fonctionnement (3), en particulier au moins un élément de commande et/ou un contenant de fluide et/ou un composant électronique, pneumatique ou hydraulique, est ou peut être reçu,
**caractérisée en ce que**
le corps extérieur (2.1, 2.2) présente au moins un moyen d'extraction (4), par lequel l'au moins une unité de fonctionnement (3) est mobile de manière translatoire entre
une position de fermeture, dans laquelle l'unité de fonctionnement (3) est reçue dans le corps extérieur (2.1, 2.2), et
une position d'ouverture, dans laquelle l'unité de fonctionnement (3) est accessible au moins partiellement de l'extérieur.

2. Installation de lavage à portique (1) selon la revendication 1, **caractérisée en ce que** le corps extérieur (2.1, 2.2) présente au moins un corps intérieur (5) pouvant être reçu à l'intérieur du corps extérieur (2.1, 2.2), dans ou au niveau duquel l'au moins une unité de fonctionnement (3) est ou peut être agencée ; et
**que** le corps intérieur (5) est logé par le biais du moyen d'extraction (4) dans le corps extérieur (2.1, 2.2) de telle manière que le corps intérieur (5) soit mobile en translation par rapport au corps extérieur (2.1, 2.2) entre
la position de fermeture, dans laquelle le corps intérieur (5) est reçu dans le corps extérieur (2.1, 2.2), et
la position d'ouverture, dans laquelle l'au moins une unité de fonctionnement (3) agencée dans ou au niveau du corps intérieur (5) est accessible au moins partiellement de l'extérieur.

3. Installation de lavage à portique (1) selon la revendication 1 ou 2, **caractérisée en ce que** l'installation de lavage à portique (1) présente un sens de passage (x_{D}), dans lequel elle est traversée par un véhicule à traiter, et
le corps extérieur (2.1, 2.2) est réalisé sensiblement en forme de parallélépipède et présente dans le sens de passage (x_{D}) une longueur d'arête supérieure à celle dans le sens transversal.

4. Installation de lavage à portique (1) selon la revendication 3, **caractérisée en ce que** l'unité de fonctionnement (3) et/ou le corps intérieur (5) est mobile au moyen du moyen d'extraction (4) sensiblement parallèlement au sens de passage de manière translatoire, en particulier linéaire, entre la position de fermeture et la position d'ouverture.

5. Installation de lavage à portique (1) selon l'une des revendications 3 ou 4, **caractérisée en ce que** l'unité de fonctionnement (3) est découverte et/ou accessible dans la position d'ouverture du corps intérieur (5) en direction transversale au sens de passage (x_{D}).

6. Installation de lavage à portique (1) selon l'une des revendications 2 à 5, **caractérisée en ce que** le corps extérieur (2.1, 2.2) présente un nombre de corps intérieurs (5) qui sont mobiles respectivement séparément par le biais d'un propre moyen d'extraction (4) entre la position de fermeture et la position d'ouverture, et
dans lesquels respectivement au moins une unité de fonctionnement (3) est ou peut être agencée.

7. Installation de lavage à portique (1) selon l'une des revendications 1 à 6, **caractérisée en ce que** le moyen d'extraction (4) est réalisé comme rail qui est logé en particulier par le biais d'un guidage à bille.

8. Installation de lavage à portique (1) selon l'une des revendications 1 à 7, **caractérisée par**
un dispositif de déplacement, en particulier un servomoteur ou un système pneumatique, pour le déplacement actionné par la force du moyen d'extraction (4) et/ou du corps intérieur (5) par rapport au corps extérieur (2.1, 2.2).

9. Installation de lavage à portique (1) selon l'une des revendications 1 à 8, **caractérisée par** un dispositif d'encliquetage (7) pour l'encliquetage amovible du corps intérieur (5) et/ou du moyen d'extraction (4) dans la position de fermeture et/ou dans la position d'ouverture.

10. Installation de lavage à portique (1) selon l'une des revendications 1 à 9, **caractérisée par** un dispositif de sécurité, en particulier un interrupteur de contact au niveau du corps intérieur (5) ou du moyen d'extraction (4) ou une porte ou un panneau avant qui est réalisé afin de
reconnaître si le corps intérieur (5) ne se trouve pas dans la position de fermeture et
qui empêche un fonctionnement de l'installation de lavage à portique (1) lorsqu'elle reconnaît que le corps intérieur (5) ne se trouve pas dans la position de fermeture.
